# EUROPEAN PATENT APPLICATION

(11) **EP 1 197 852 A2**
(43) Date of publication of application: **17.04.2002**
(21) Application number: 01121996.1
(22) Date of filing: 13.09.2001
(51) Int. Cl.: G06F 9/44

(54) **Program generating apparatus for built-in microcomputer**

(30) Priority: 14.09.2000 JP 2000279906
(71) Applicant: Denso Corporation, Kariya-city, Aichi-pref., 448-8661 (JP)
(72) Inventor: Iwata, Muneyuki, Kariya-city, Aichi-pref., 448-8661 (JP)
(74) Representative: Leson, Thomas Johannes Alois, Dipl.-Ing.

(57) **Abstract**

A program generating apparatus automatically generates a program to be installed on a personal computer (PC) by utilizing a conventional program generating technique (2, 6) first. A program executing portion (9) executes the initialization process of the PC program, and the constant data of the program is stored in the RAM of the apparatus as a result of the execution. Further the program executing portion executes an extraction program (5) for extracting the constant data from the RAM into the constant data file (10). A conversion tool (11) converts each of address values included in the constant data to an array variable description independent of the RAM area, and outputs a converted constant data file (12) as a result of the conversion. A model compiler (13) for ECU generates a definition description of the constant data from the converted constant data file, and combines the definition description with source code except the initialization process.

## Description

The present invention relates to a method for automatically generating a program to be installed on a built-in microcomputer such as an electronic control unit (ECU) for a vehicle.

In recent years, a program generating tool, which automatically generates a program from a model description (model) obtained by modeling the specification of the program to be installed on a computer system, has been developed. The model is provided in a form of a block diagram, a state transition diagram and the like. Recently, a program generating tool which automatically generates an object oriented program from an object oriented model has come to the front.

However, most of the above-described program generating tools are provided for developing a program to be executed on a general-purpose personal computer or work station. The tool cannot be directly used for developing a program to be executed on a built-in microcomputer such as an ECU (engine ECU) for controlling a vehicle engine.

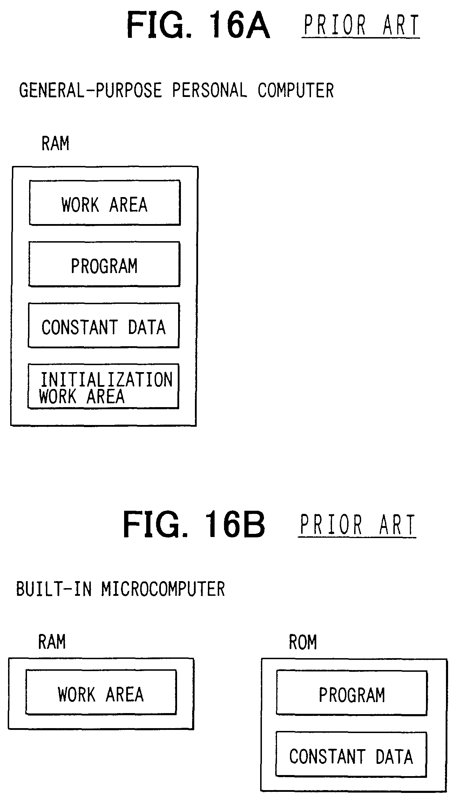

That is, a program generated for a general-purpose personal computer or work station is stored in a storage device such as a hard disk, and loaded into RAM on execution as shown in Fig. 16A. In the case that the program is an object oriented program automatically generated from an object oriented model, objects are instantiated when the initialization process of the program is executed. Constant data is defined and stored in an area of the RAM during the instantiation. Thus, in the general-purpose personal computer or work station, a program and constant data used by the program are stored in the RAM.

On the other hand, abuilt-inmicrocomputerusuallyexecutes only a specific program. For example, the microcomputer of an engine ECU executes only an engine control program. Further, the built-in computer has RAM whose capacity is extremely low in comparison with the general-purpose personal computer or work station. Accordingly, in the built-in microcomputer, the program and constant data used by the program are stored in nonvolatile ROM as shown in Fig 16B, and the RAM is only used as a work area for execution of the program.

However, most of programs generated by the conventional program generating tool do not define constant data until the initialization process is executed as described above. Therefore, the constant data of those programs cannot be stored into the ROM beforehand.

It is an object of the present invention to provide a program generating apparatus which generates a program to be installed on a built-in microcomputer by utilizing a conventional technique for automatically generating a program.

A program generating apparatus according to the present invention includes a model compiler for PC and a compiler which are the same components as those of a conventional program generating apparatus. The model compiler generates a source program based on a model which is generated for automatically generating a program. The compiler compiles and links the source program into an object program in the execute form, and allocates memory areas to the object program. The program generating apparatus further includes a program executing portion, an address value conversion tool, and a model compiler for ECU.

The program executing portion executes an initialization process of the object program. The program executing portion further executes a constant data extraction program, so that the constant data stored in the allocated memory as a result of execution of the initialization process is extracted. The address value conversion tool converts each of the address values included in the extracted constant data to an identification symbol corresponding to the address value and independent of the memory areas. The model compiler for ECU generates a definition description based on the constant data in which the address values are replaced with the identification symbols.

Further the model compiler for ECU generates a source program which implements processes of the program except the initialization process, and combine the generated source program with the definition description into a final source program. The final source program includes the constant data defined independent of the memory area. Accordingly the final source program can be installed on a built-in microcomputer.

Preferably, the model is an object oriented model and the continuous memory area is allocated for each object. Then an array variable description which includes an object name as the variable name is employed as the identification symbol.

The invention, together with additional objects, features and advantages thereof, will be best understood from the following description, the appended claims and the accompanying drawings in which:
Fig. 1 is a functional block diagram of a program generating apparatus according to an embodiment of the present invention;
Fig. 2 is a flowchart of an injection quantity correction process which is an example of a program generated by the program generating apparatus;
Fig. 3 is a class diagram of the specification of the injection quantity correction process;
Fig. 4 is a state transition diagram of the specification of the injection quantity correction process;
Fig. 5 is a flowchart of a process executed by a program executing portion of the apparatus;
Fig. 6 is a schematic diagram of the associations among constant data elements generated as a result of execution of the initialization process of the injection quantity correction process;
Fig. 7 is a schematic diagram of the constant data stored in RAM;
Fig. 8 is a schematic diagram of start address information of the constant data;
Fig. 9 is a flowchart of a constant data extraction process executed at step 210 of Fig. 5;
Fig. 10 is a schematic diagram of a constant data file provided as a result of execution of the constant data extraction program;
Fig. 11 is a flowchart of a process executed by a constant data file conversion tool;
Fig. 12 is a flowchart of an address value conversion process executed at step 340 of Fig. 11;
Fig. 13 is a schematic diagram of a converted constant data file provided as a result of execution of the constant data file conversion tool;
Fig. 14 is a flowchart of a definition description generating process executed by a model compiler for ECU;
Fig. 15 is a schematic diagram of a definition description of the constant data as a result of execution of the definition description generating process;
Fig. 16A is a schematic diagram of RAM areas of a conventional general-purpose personal computer; and
Fig. 16B is a schematic diagram of RAM areas and ROM areas of a conventional built-in microcomputer.

The present invention will be described with reference to accompanying drawings.

A program generating apparatus for a vehicle ECU is a general-purpose personal computer system which includes a CPU, ROM, RAM, an I/O system, and bus lines connecting these components. The system further includes a hard disk drive as a peripheral device, a keyboard and a pointing device as input devices, a display unit as an output device, and a communication device for enabling communication with the external.

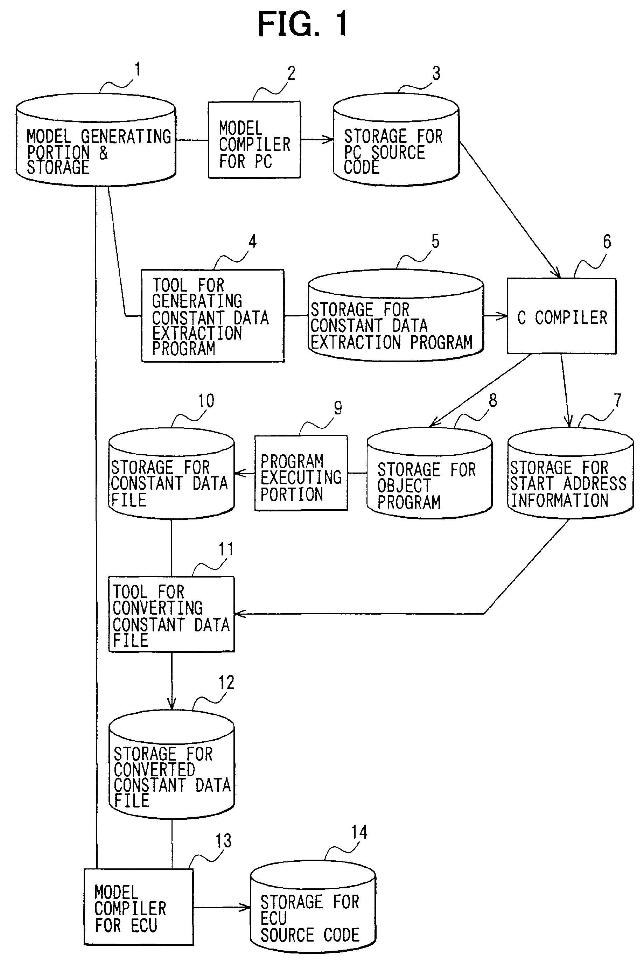

Referring to Fig. 1, the program generating apparatus includes a model generating portion and storage 1 as model generating means, a model complier 2 for PC as source program generating means, storage 3 for PC source code, a tool 4 for generating a program for extracting constant data as extraction program generating means, storage 5 for the program for extracting constant data, a C compiler 6 as compile means, storage 7 for start address information of constant data, storage 8 for an object program, a program executing portion 9 as extraction means, storage 10 for a constant data file, a tool 11 for converting the constant data file as conversion means, storage 12 for a converted constant data file, a model compiler 13 for ECU as source program generating means, and storage 14 for ECU source code.

The model compiler 2 for PC and the C compiler 6 are the same components as those of a conventional program generating apparatus. That is, a program which is generated by using the model compiler 2 and the C compiler 6 defines constant data during execution of its initialization process, and stores the constant data in the RAM of the program generating apparatus. The constant data often includes, as an element, a pointer (address value) which indicates an address of the RAM area which stores constant data. Thereby, a list structure, a tree structure, or a network structure formed with constant data elements can be represented. It is to be noted that an address of RAM area is hereinafter referred to as 'address' while a pointer indicating an address of RAM area is referred to as 'address value'.

The model generating portion and storage 1 generates and stores an object oriented model used for automatically generating a program to be installed on the vehicle ECU. The object oriented model is provided in the form of a class diagram and a state transition diagram in the UML (Unified Modeling Language).

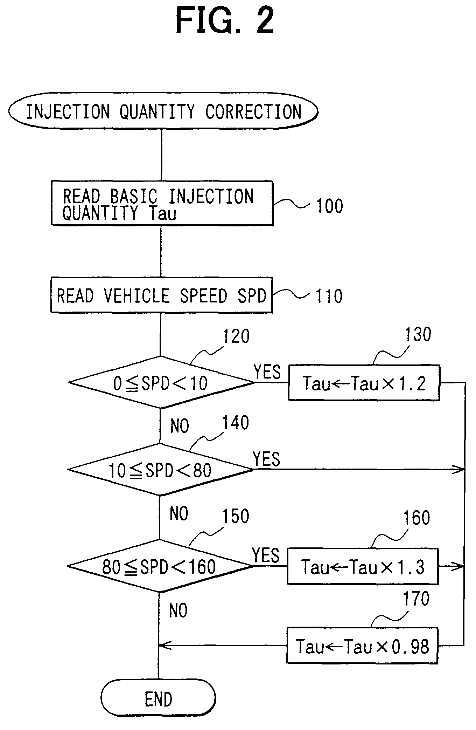

As an actual example, consider generation of an injection quantity correction program. A conventional injection quantity correction process corrects the fuel injection quantity based on the vehicle speed as follows. Referring to Fig. 2, the process reads a basic injection quantity Tau at step 100, and a vehicle speed SPD at step 110. These values Tau and SPD are calculated by another routine.

At step 120, it is determined whether the vehicle speed SPD is lower than 10 km/h. If it is determined that the vehicle speed is lower than 10 km/h (step 120:YES), the basic injection quantity Tau is multiplied by 1.2 at step 130 so that high power necessary for low-speed running (starting) is obtained, and the process moves to step 170.

If it is determined that the vehicle speed is equal to or higher than 10 km/h (step 120: NO), it is further determined at step 140 whether the vehicle speed SPD is lower than 80 km/h. If it is determined that the vehicle speed SPD is lower than 80 km/h (step 140: YES), the process moves to step 170.

If it is determined that the vehicle speed SPD is equal to or higher than 80 km/h (step 140: NO), it is further determined at step 150 whether the vehicle speed SPD is lower than 160 km/h. If it is determined that the vehicle speed SPD is lower than 160 km/h (step 150: YES), the basic injection quantity Tau is multiplied by 1.3 at step 160 so that high power necessary for high speed running is obtained. Then the process moves to step 170. If it is determined that the vehicle speed SPD is equal to or higher than 160 km/h (step 160: NO), the process terminates.

At step 170, the basic injection quantity or corrected basic injection quantity Tau is multiplied by 0.98 at step 170, so that the final injection quantity Tau is obtained. The correction coefficient '0.98' used as a multiplier at step 170 is provided for correcting the basic injection quantity Tau itself, while the correction coefficients '1.2' and '1.3' used as multipliers at respective steps 130 and 160 are provided for correcting the basic injection quantity Tau based on the vehicle speed. Therefore, when the basic injection quantity Tau itself is changed, only the correction coefficient '0.98' should be changed. That is, the correction coefficients '1.2' and '1.3' do not need to be changed.

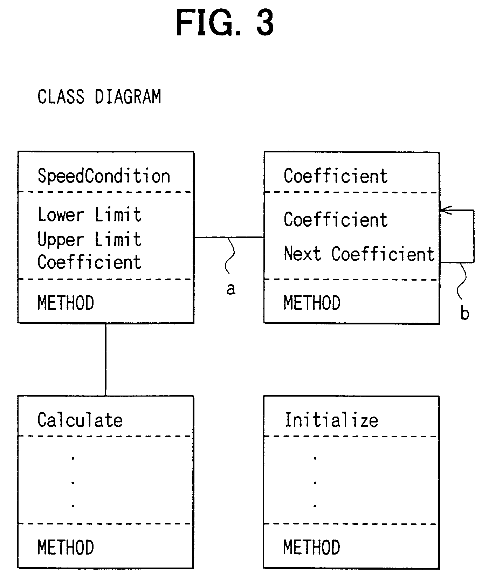

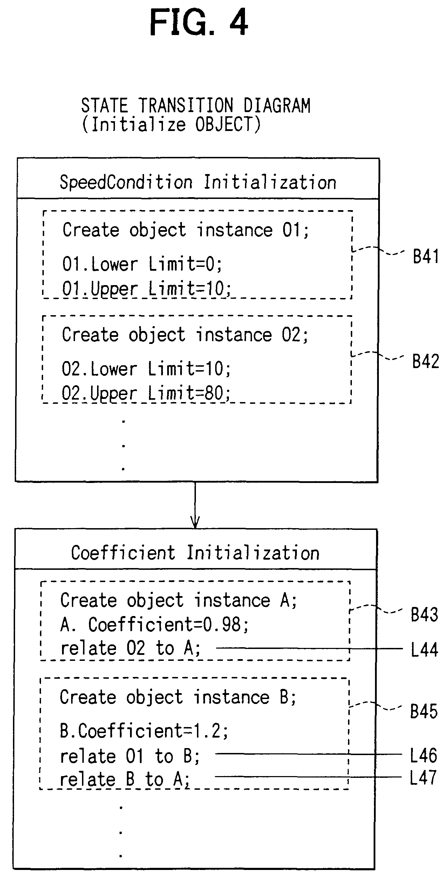

As described above, the model of the specification of the injection quantity correction program is provided by the model generating portion 1 in the form of a UML class diagram and a UML state transition diagram as shown in Figs. 3 and 4, respectively.

The class diagram includes blocks corresponding to the respective objects to be generated. Each of the blocks is divided into three areas. The upper area includes the name of the object. The middle area includes attributes (data) of the object. The low area includes operations (methods) of the object. The associations among the objects are represented by lines connecting the blocks.

The class diagram shown in Fig. 3 includes four blocks corresponding to the respective objects which implement the injection quantity correction process, that is, 'Calculate' object, 'SpeedCondition' object, 'Coefficient' object and 'Initialize' object.

'Calculate' object performs comparison of the vehicle speed SAD with criteria (steps 120, 140 and 150 of Fig. 2) and correction for the basic injection quantity Tau (steps 130, 160 and 170 of Fig. 2). 'Speed Condition' object holds the criteria '0', '10', '80' and '160' for the comparison. 'Coefficient' object holds the correction coefficients '0.98', '1.2' and '1.3' for the correction.

The state transition diagram includes portions corresponding to the respective objects. Fig. 4 shows a part of the initialization procedure ('SpeedCondition Initialization') of 'SpeedCondition' object and a part of the initialization procedure ('Coefficient Initialization') of 'Coefficient' object following to 'SpeedCondition Initialization'. These initialization procedures together constitute a part of the portion of the state transition diagram corresponding to 'Initialize' object.

'Initialize' object implements the initialization process of the injection quantity correction program. The initialization process is usually executed when the ignition switch is turned on. During the execution of the initialization process, each of the objects is instantiated, that is, instances (entities) corresponding to the class (type definition) of each of the objects are generated. Specifically, the values of the attributes of the objects are defined and stored in the RAM area. It is to be noted that 'object' means both a class and instances generated from the class.

In Fig. 4, a portion B41 of 'SpeedCondition Initialization' represents that an instance O1 of 'SpeedCondition' object is generated. Further it represents that 'Lower Limit' is set to '0' and 'Upper Limit' is set to '10' in the instance O1. Similarly, another portion B42 represents that another instance O2 of 'SpeedCondition' object is generated. It further represents that 'Lower Limit' is set to '10' and 'Upper Limit' is set to '80' in the instance O2. Thus, the values of the attributes of 'SpeedCondition' object, that is, the criteria '0', '10', '80' and '160' are actually assigned to attributes during execution of the initialization process.

Moreover, in Fig. 4, a portion B43 of 'Coefficient Initialiation' represents that an instance A of 'Coefficient' object is generated and 'Coefficient' is set to '0.98' in the instance A. Further it represents that the instance O2 of 'SpeedCondition' object is related to this instance A (L44). Moreover, in Fig. 4, another portion B45 of 'Coefficient Initialization' represents that another instance B is generated and 'Coefficient' is set to '1.2' in the instance B. It further represents that the instance O1 of 'SpeedCondition' object is related to this instance B (L46) and this instance B is related to the instance A (L47). Thus, the values of the attributes of 'Coefficient' object, that is, thecorrectioncoefficients '0.98', '1.2' and '1.3' are actually assigned to the attributes during execution of the initialization process.

The associations L44, L46 between the instances of 'SpeedCondition' object and the instances of 'Coefficient' object are represented by symbol 'a' in Fig. 3. The association L47 between the instances of 'Coefficient' object is represented by symbol 'b' in Fig. 3. Further, the association L44 of the instance O2 with the instance A corresponds to the association of the decision step 140 with the multiplication step 170 of Fig. 2. The association L46 of the instance O1 with the instance B corresponds to the association of the decision step 120 with the multiplication step 130 of Fig. 2. The association L47 of the instance B with the instance A corresponds to the association of the multiplication step 130 with the multiplication step 170 of Fig. 2.

The model compiler 2 for PC generates source code (a source program) for a general-purpose personal computer (PC) based on the object oriented model which is stored in the model storage 1 and includes the above-described class diagram and state transition diagram. The generated source code is stored into the storage 3 for PC source code.

The tool 4 generates, based on the object oriented model stored in the model storage 1, a program for extracting constant data which is defined and stored in RAM during execution of the initialization process of an object program corresponding to the above PC source code. The constant data includes one or more elements. For example, constant data corresponding to the respective instances O1 O2 and O3 of 'SpeedCondition' object includes three elements, that is, 'Lower Limit', 'Upper Limit', and 'Coefficient'.

Therefore the tool 4 first detects, for each object, the name of the object, the number of constant data element included in the object, and the type of each constant data element from the object oriented model. Then the tool 4 generates an extraction program using the detected items. The generated extraction program is stored in the storage 5. The extraction program distinguishes address values in the constant data from other constant data based on the type of the constant data element on execution.

The C compiler 6 compiles the PC source code stored in the storage 3 so as to generate object code (a PC program) in the execute form. Further, the C compiler 6 compiles the extraction program stored in the storage 5 so as to generate object code (an extraction program) in the execute form. The C compiler 6 further links the object code and allocates RAM areas to the object code corresponding to the PC program and the extraction program. The RAM areas are allocated not only for storing the programs but also for storing constant data of each of the objects of the programs. The RAM areas for storing constant data may be separately allocated to each of the objects. The PC program and the extraction program are stored in the storage 8.

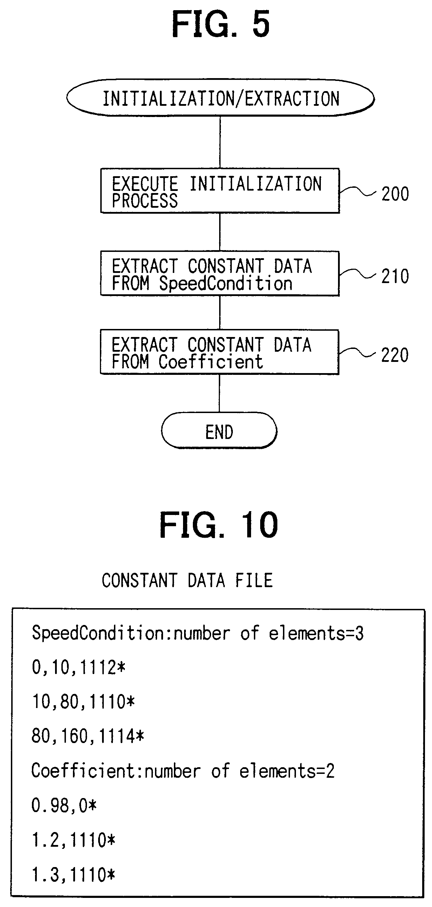

Referring to Fig. 5, at step 200, the program executing portion 9 executes the initialization process of the PC program stored in the storage 8. The initialization process corresponds to 'Initialize' object. The initialization process cannot be executed on a built-in microcomputer, because the relatively large area of the RAM is used as an initialization work area for defining the constant data during the initialization as shown in Fig. 16A. Accordingly, in the present embodiment, the initialization process is executed on the program generating apparatus formed with the personal computer.

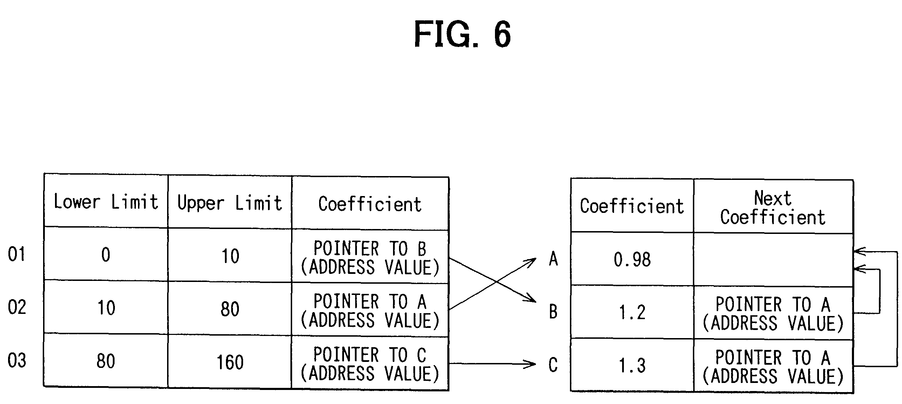

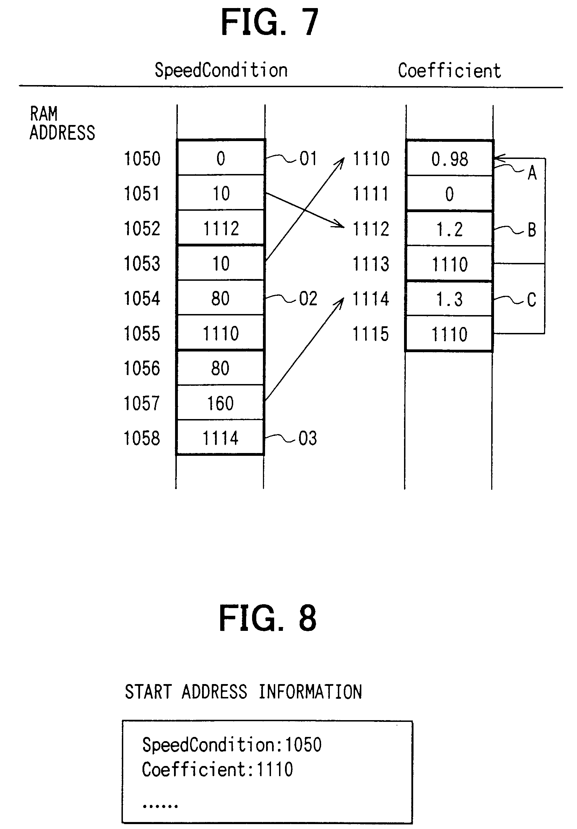

During execution of the initialization process, the objects are instantiated as described above. That is, constant data of the objects is defined as shown in Fig. 6 and stored in the RAM areas allocated for storing constant data as shown in Fig. 7.

Referring to Fig. 6, three instances O1, O2 and O3 of 'SpeedCondition' object are generated by the initialization process partly corresponding to the portions B41, B42 of the state transition diagram shown in Fig. 4. Further three instances A, B and C of 'Coefficient' object are generated by the initialization process partly corresponding to the portions B43, B45 of the state transition diagram shown in Fig. 4. That is, the values are assigned to the attributes ('Upper Limit', 'Lower limit' and 'Coefficient') of the respective instances O1, O2, 03, and the values are assigned to the attributes ('Coefficient' and 'Next Coefficient') of the respective instances A, B, C.

A pointer indicating the address of the RAM area which stores the instance A is assigned to the third attribute ('Coefficient') of the instance 02 by the process corresponding to the portion L44 of Fig. 4. A pointer indicating the address of the RAM area which stores the instance B is assigned to the third attribute of the instance O1 by the process corresponding to the portion L46 of Fig. 4. Similarly, a pointer indicating the address of the RAM area which stores the instance C is assigned to the third attribute of the instance O3 by the process not shown in Fig. 4.

A pointer indicating the address of the RAM area which stores the instance A is assigned to the second attribute ('Next Coefficient') of the instance B by the process corresponding to the portion L47 of Fig. 4. Similarly, a pointer indicating the address of the RAM area which stores the instance A is also assigned to the second attribute of the instance B by the process not shown in Fig. 4. Further, value '0' is stored in the second attribute of the instance A in order to represent the instance A is related to none of the instances.

The instances are stored in the RAM areas which are allocated by the C compiler 6 for storing constant data. Referring to Fig. 7, the instances O1, O2, O3 of 'SpeedCondition' object are stored in the RAM area of address '1050', and the instances A, B, C of 'Coefficient' object are stored in the RAM area of address '1110'. The address value '1112' corresponding to the instance B is stored in the RAM area of address '1052' corresponding to the third attribute of the instance O1 so that the instance O1 is related to the instance B. The address value '1110' corresponding to the instance A is stored in the RAM area of address '1055' corresponding to the third attribute of the instance O2 so that the instance O2 is related to the instance A. The address value '1114' corresponding to the instance C is stored in the RAM area of address '1058' corresponding to the third attribute of the instance O3 so that the instance O3 is related to the instance C.

Further, the address value '1110' corresponding to the instance A is stored in the RAM areas of addresses '1113' and '1115' corresponding to the second attributes of the instances B, C so that both of the instances B, C are related to the instance A. A value '0' is stored in the RAM area of address '1111' in order to represent that the instance A is related to none of the instances.

The C compiler 6 generates, as start address information, the correspondence between each of the object names and the start address of the RAM area allocated for storing constant data of the object as shown in Fig. 8. The start address information is stored in the storage 7.

At steps 210, 220 of Fig. 5, the program executing portion 9 further executes the extraction program stored in the storage 8 for extracting the constant data which is stored in the RAM area as a result of execution of the initialization process of the PC program. The constant data is extracted by objects, that is, the constant data of 'SpeedCondition' object is first extracted at step 210 and the constant data of 'Coefficient' object is next extracted at step 220.

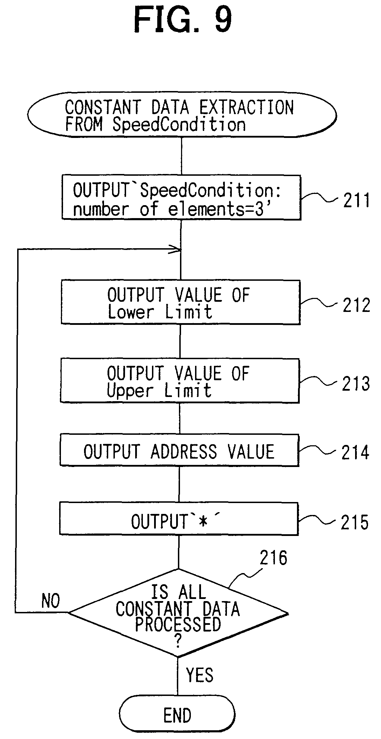

Fig. 9 shows the detailed flowchart of the process executed at step 210 of Fig. 5. First, the object name and the number of constant data elements are outputted at step 211. Specifically, a character string 'SpeedCondition: number of elements=3' is outputted. Next, the value of 'Lower Limit' is outputted at step 212, and the value of 'Upper Limit' is outputted at step 213. Further, the pointer (address value) indicating the RAM area corresponding to the instance of 'Coefficient' object is outputted at step 214. The address value thus included in the constant data are detected based on the types of the constant data elements, and mark'*' is added to the outputted address value at step 215. It is determined at step 216 whether all the constant data of 'SpeedCondition' object is already processed. If the conclusion of step 216 is NO, steps 212-215 are repeated for the pending constant data. If the conclusion of step 216 is YES, the process terminates.

Similarly the constant data of 'Coefficient' object is extracted at step 220. That is, the object name and the number of elements are outputted first, and then the constant data ('Coefficient' and the address value 'Next Coefficient') is outputted sequentially. Thereafter the constant data extraction process terminates.

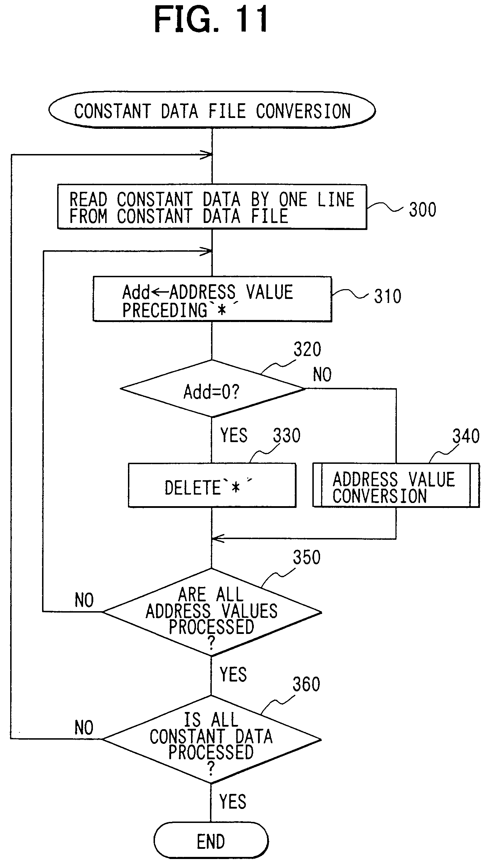

The extracted constant data is provided in the form of constant data sets corresponding to the respective objects. Each of the constant data sets includes the object name, the number of constant data elements and constant data. The constant data sets are stored in the storage 10 in the form of a constant data file as shown in Fig. 10.

Specifically, the constant data set corresponding to 'SpeedCondition' object includes the character string 'SpeedCondition: number of elements=3' in the first line, and the constant data '0, 10, 1112*', '10, 80, 1110*' and '80, 160, 1114*' in the second to fourth lines, respectively. Each of the third elements of the constant data of 'SpeedCondition' object is marked with '*', because it is an address value. The constant data set corresponding to 'Coefficient' object includes the character string 'Coefficient: number of elements=2' in the fifth line of the constant data file, and the constant data '0.98, 0*', '1.2, 1110*' and '1.3, 1110*' in the sixth to eighth lines, respectively. Each of the second elements of the constant data of 'Coefficient' object is marked with '*', because it is an address value.

The constant data shown in Fig. 10 cannot be stored directly in the ROM of the ECU, because it includes the address values dependent on the RAM areas. Then the tool 11 replaces each of address values in the constant data with an identification description based on the start address information in the storage 7 as follows.

Referring to Fig. 11, the constant data is read by one line from the constant data file at step 300. That is, at the first cycle of the process, constant data '0, 10, 1112*' is read from the second line of the constant data file shown in Fig. 10. The value preceding the mark "*", that is, the address value is assigned to a variable Add at step 310. It is determined at step 320 whether the variable Add is '0'. If it is determined that the variable Add is '0' (step 320: YES), that is, the value of the variable Add does not represent a pointer, the mark "*" is deleted at step 330 and the process moves to step 350. If it is determined that the variable Add is not '0' (step 320: NO), the value of the variable Add is converted to the identification description at S340 and thereafter the process moves to step 350.

It is determined at step 350 whether the address values corresponding to all themarks '*' of the line is already processed, because the constant data may include a plurality of address values as elements. If the conclusion of step 350 is YES, the process moves to step 360. If the conclusion of step 350 is NO, steps 310-340 are repeated for each of the pending address values. It is determined at step 360 whether all the constant data in the constant data file is already processed. If the conclusion of step 360 is YES, the process terminates. If the conclusion of step 360 is NO, steps 300-350 are repeated for the pending constant data.

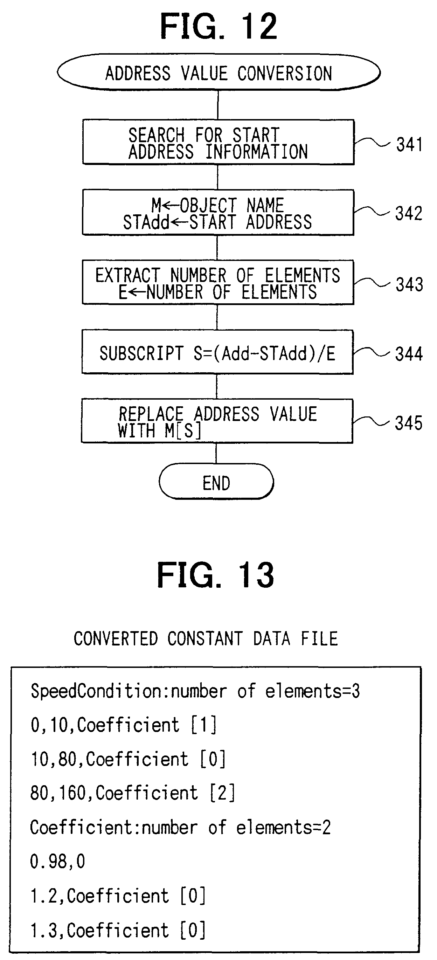

Fig. 12 shows the detailed flowchart of the process executed at step 340 of Fig. 11. The process converts the address value assigned to the variable Add to an array variable description including the object name as the variable name. That is, the array variable description is employed as the above-described identification description on the assumption that the C compiler 6 allocates a continuous RAM area for each of the objects, that is, for each of the constant data sets.

Referring to Fig. 12, at step 341, the start address which is the closest to the value of the variable Add among start addresses equal to or less than the value of the variable Add is retrieved from the start address information stored in the storage 7 . Further the object name corresponding to the retrieved start address is retrieved from the start address information. At step 342, the retrieved object name is assigned to a character variable M, and the retrieved start address is assigned to a variable STAdd.

At step 343, the number of constant data elements corresponding to the object name assigned to the variable M is retrieved from the constant data file, and the retrieved number is assigned to a variable E. At step 344, a subscript S = (Add-STAdd)/E is calculated. At step 345, an array description M[S] is formed, and the address value and the mark '*' in the constant data file is replaced with the array description M[S]. Then the process terminates.

As an actual example, consider the conversion of the address value '1112*' in the second line of the constant data file. At step 341, the start address '1110', which is the closest to the address value '1112' among start addresses equal to or less than the address value '1112', is retrieved from the start address information shown in Fig. 8.

Further the object name 'Coefficient' corresponding to the start address '1110' is retrieved. The object name 'Coefficient' is assigned to the character variable M, and the start address '1110' is assigned to the variable STAdd at step 342. The number '2', which is the number of constant data elements of 'Coefficient' object, is retrieved and assigned to the variable E at step 343. The subscript S = (1112-1110) / 2 = 1 is obtained at step 344. The array description 'Coefficient [1]' is formed, and the address value '1112*' in the constant data file is replaced with the array description 'Coefficient [1]' at step 345.

In this way, the object name corresponding to the address value to be replaced is employed as the variable name of the array variable description. Further, the number corresponding to the instance to which the address value points is employed as the subscript of the array variable description. That is, there is a one-to-one correspondence between the address values to be replaced and the array variable descriptions.

A converted constant data file shown in Fig. 13 is provided as a result of execution of the process shown in Fig. 12, and stored in the storage 12. The converted constant data file includes the array variable descriptions as pointers.

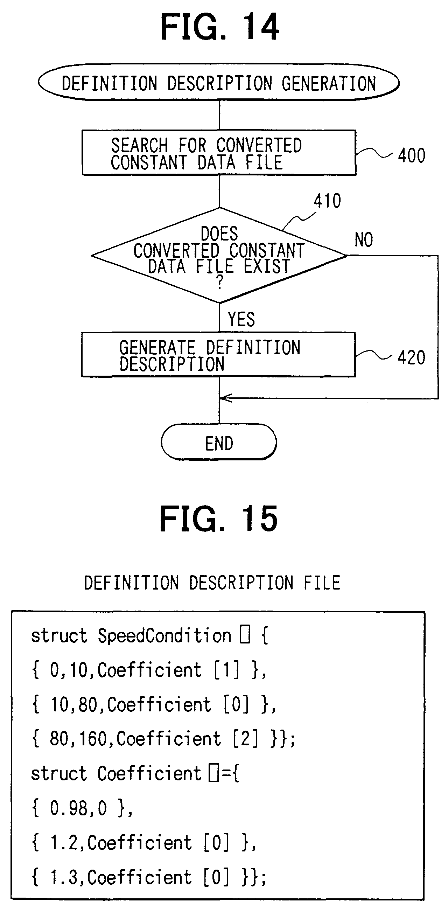

The model compiler 13 for ECU converts the converted constant data file in the storage 12 to a definition description according to the C language as follows. Referring to Fig. 14, the storage 12 is searched for the converted constant data file at step 400. It is determined at step 410 whether the converted constant data file exists in the storage 12. If it is determined that the converted constant data file does not exist in the storage 12 (step 410: NO), the process terminates. If it is determined that the converted constant data file exists in the storage 12 (step 410: YES), a definition description file corresponding to the header file of a C program is generated from the converted constant data file at step 420.

Fig. 15 shows the definition description file generated from the converted constant data file shown in Fig. 13. In the definition description file, 'SpeedCondition' and 'Coefficient' are defined as structure variables. The associations among the constant data elements are defined by using the array variable descriptions corresponding to elements of the arrays of the structures. Thereby the list structure is formed with the constant data elements in the definition description file. The definition description file is outputted and then the process terminates.

The model compiler 13 for ECU further generates source code corresponding to the processes of the injection quantity correction except the initialization process from the object oriented model stored in the model storage 1. The model compiler 13 for ECU combines the generated source code with the definition description file, so that source code which includes the constant data defined independent of the RAM area is obtained as a final output. The final source code is stored in the storage 14.

If the source code in the storage 14 is complied, object code (an ECU program), which includes the constant data defined independent of the RAM area and the processes of the PC program except the initialization process, is obtained. That is, the object code can be installed on the ROM of the vehicle ECU and executed.

When the capacity of the RAM of the ECU is sufficiently high to execute a PC program, an operator may instruct the program generating apparatus not to generate the converted constant data file. For example, an ECU for program testing sometimes has the RAM of a relatively high capacity. When the apparatus is instructed not to generate the converted constant data file, the components 2-12 are disabled, that is, the converted constant data file is not generated. Then the model compiler 13 for ECU determines that the converted constant data file does not exist in the storage 12 at step 410 of Fig. 14. In response to the determination, the model compiler 13 for ECU generates PC source code from the object oriented model stored in the model storage 1. The PC source code is the same as the source code which is usually generated by the model compiler 2 for PC.

The effects of the present embodiment are as follows. The program generating apparatus automatically generates a program to be installed on the ROM of the vehicle ECU by utilizing a conventional technique 2, 6 for automatically generating a PC program.

Moreover, the tool 4 automatically generates the constant data extraction program by detecting the object name and the number of the constant data elements, which are necessary for generating the array variable description, from the object oriented model stored in the model storage 1. The detected object name and the number of the constant data elements are automatically written in the constant data file as a result of execution of the extraction program. Therefore the apparatus is fully automatic, that is, the operator is not required to input data specific to the program to be generated, for example, the object name and the number of constant data elements.

The program installed on the vehicle ECU usually implements advanced and complicated control. Accordingly, the time and labor required for developing the program to be installed on the vehicle ECU is largely reduced, if the present program generating apparatus is used for generating such a program.

### (Modifications)

In the above embodiment, the program generating apparatus is not required to include the model generating portion 1. That is, another apparatus may generate the object oriented model of the program. In this case, the present program generating apparatus should be configured to be capable of obtaining the object oriented model generated in the outside of the apparatus.

Further, in the above embodiment, the program generating apparatus may generate a program to be installed on a built-in microcomputer other than a vehicle ECU. For example, the program generating apparatus may generate a program to be installed on a general-purpose built-in microcomputer such as a built-in microcomputer installed in household electrical appliances.

The present invention is not limited to the above embodiment. Various changes in the form and detail thereof may be made therein without departing from the scope of the present invention.

A program generating apparatus automatically generates a program to be installed on a personal computer (PC) by utilizing a conventional program generating technique (2, 6) first. A program executing portion (9) executes the initialization process of the PC program, and the constant data of the program is stored in the RAM of the apparatus as a result of the execution. Further the program executing portion executes an extraction program (5) for extracting the constant data from the RAM into the constant data file (10). A conversion tool (11) converts each of address values included in the constant data to an array variable description independent of the RAM area, and outputs a converted constant data file (12) as a result of the conversion. A model compiler (13) for ECU generates a definition description of the constant data from the converted constant data file, and combines the definition description with source code except the initialization process.

## Claims

1. A program generating apparatus comprising:
a source program generating means (2, 13) for generating a source program based on a model generated for automatically generating a program; and
a compile means (6) for allocating a memory area to and compiling-and-linking the source program generated by said source program generating means (2, 13), said apparatus being **characterized by**:
an extraction means (9) for executing an initialization process of an object program obtained as a result of the compiling-and-linking by said compile means (6) and an extraction process which extracts constant data stored in said allocated memory area as a result of execution of said initialization process ; and
a conversion means (11) for converting an address value, which is included in the constant data extracted by said extraction means (9) and represents an address of said allocated memory area, to an identification symbol corresponding to said address and independent of said memory area,
**characterized in that** said source program generating means (2, 13) generates a source program in which constant data is defined independent of said memory area based on the constant data in which said address value is replaced with said identification symbol to which said conversion means (11) converts said address value.

2. A program generating apparatus comprising as in claim 1,
**characterized in that** said model is a model generated for automatically generating a program for a vehicle and said source program corresponds to an object program installed on a vehicle electronic control unit.

3. A program generating apparatus as in claim 1 or 2,
**characterized in that** said source program generating means (2, 13) generates a definition description, according to a grammar employed for generating a source program by said source program generating means (2, 13), based on the constant data in which said address value is replaced with said identification symbol to which said conversion means (11) converts said address value, and combines the definition description with a source program which implements processes of said program except said initialization process, so that the source program in which constant data is defined independent of said memory area is generated.

4. A program generating apparatus as in any one of claims 1 to 3 further **characterized by**:
start address information generating means (6) for generating ,as start address information, acorrespondencebetween a constant data set, which is a predetermined group of said constant data, and a start address of said memory area allocated to the constant data set,
**characterized in that** said conversion means (11) converts said address value to the identification symbol corresponding to said constant data set corresponding to said address value based on said start address information and a number of elements which constitute the constant data in said constant data set.

5. A program generating apparatus as in claim 4,
**characterized in that** an array variable description is employed as said identification symbol, and said conversion means (11) converts said address value to said array variable description by comparing said start address of said memory area provided as said start address information with said address value.

6. A program generating apparatus as in claim 4 or 5,
**characterized in that** said extraction means (9) extracts said constant data by said constant data set and outputs said number of elements which constitute the constant data.

7. A program generating apparatus as in claim 6,
**characterized in that** said model is an object oriented model, and said constant data set is a group of constant data which constitutes one object.

8. A program generating apparatus as in claim 7,
**characterized in that** said array variable description includes an object name as a variable name.

9. A program generating apparatus as in any one of claims 1 to 8 further **characterized by**:
extraction program generating means (4) for generating, based on said model, an extraction program which implements said extraction process.

10. A program generating apparatus as in any one of claims 1 to 9 further **characterized by**:
model generating means (1) for generating said model.

11. A program generating apparatus as in any one of claims 1 to 3,
**characterized in that** said identification symbol independent of said memory area is an array variable description.

12. A program generating method comprising the steps of:
retrieving a model generated for automatically generating a program;
generating (2, 13) a first source program based on saidmodel; and
compiling (6) said first source program into an object program in an execute form and allocating (6) a memory area to said object program, said method being **characterized by** the steps of:
executing (9) an initialization process of said object program;
extracting (9) constant data stored in said allocated memory area as a result of execution of said initialization process;
converting (11) an address value included in said constant data to a structure variable corresponding to said address value and independent of said memory area;
generating (13) a definition description according to a grammar from said constant data in which said address value is replaced with said structure variable;
generating (13) a second source program which implements processes of said program except said initialization process according to said grammar; and
combining (13) said definition description with said second source program.

13. A program generating method as in claim 12, **characterized in that**:
said memory area is allocated by a constant data set which is a predetermined group of said constant data; and
said converting step (11) converts said address value to said structure variable which has a variable name corresponding to said constant data set to which said address value points and a subscript corresponding to a portion of said constant data set to which said address values points by comparing a start address of said memory area allocated for said constant data set with said address value.

14. A program generating method as in claim 12 or 13, **characterized in that**:
said model is an object oriented model;
said constant data set is a group of constant data which constitutes one object; and
said variable name corresponding to said constant data set is an object name.
